(19) Europäisches Patentamt
European Patent Office
Office européen des brevets

(11)  EP 3 013 658 B1

(12)  **EUROPÄISCHE PATENTSCHRIFT**

(45) Veröffentlichungstag und Bekanntmachung des Hinweises auf die Patenterteilung:
**07.07.2021  Patentblatt 2021/27**

(51) Int Cl.:
***B60W 30/095*** *(2012.01)*      ***B60W 30/10*** *(2006.01)*
***B60W 30/18*** *(2012.01)*      ***B60W 50/00*** *(2006.01)*

(21) Anmeldenummer: **14727760.2**

(22) Anmeldetag: **22.05.2014**

(86) Internationale Anmeldenummer:
**PCT/EP2014/060492**

(87) Internationale Veröffentlichungsnummer:
**WO 2014/206654 (31.12.2014 Gazette 2014/53)**

(54) **VORHERSAGE VON FAHRPFADEN EINES FAHRZEUGS**

PREDICTION OF A DRIVING PATH OF A VEHICLE

ESTIMATION DU TRAJET DE CONDUITE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2013  DE 102013212359**

(43) Veröffentlichungstag der Anmeldung:
**04.05.2016  Patentblatt 2016/18**

(73) Patentinhaber: **Bayerische Motoren Werke Aktiengesellschaft**
**80809 München (DE)**

(72) Erfinder:
• **LIEBNER, Martin**
  **80992 München (DE)**
• **RUHHAMMER, Christian**
  **80336 München (DE)**
• **KLANNER, Felix**
  **639664 Singapore (DE)**
• **KLÖDEN, Horst**
  **80797 München (DE)**

(56) Entgegenhaltungen:
EP-A1- 1 684 142      DE-A1-102010 044 631
US-A1- 2011 098 922

EP 3 013 658 B1

**Beschreibung**

Die Erfindung betrifft ein Verfahren zum Vorhersagen des Fahrpfades eines Fahrzeugs und ein entsprechendes Fahrerassistenzsystem.

Heutzutage werden in Fahrzeugen, insbesondere Personenkraftwagen (PKW), Systeme verbaut, die den Fahrer bei seiner Fahraufgabe unterstützen, sogenannte Fahrerassistenzsysteme. Es sind Fahrerassistenzsysteme bekannt, die den Fahrer in bestimmten Situationen vor Konflikten mit anderen Verkehrsteilnehmern warnen oder, in besonders kritischen Situationen, verzögernd in die Fahrzeugdynamik eingreifen. Dabei ist die Notwendigkeit bekannt, potenzielle Konflikte hinsichtlich ihrer Eintrittswahrscheinlichkeit zu beurteilen, um den Fahrer nicht mit einer Vielzahl überflüssiger Warnungen in der Durchführung seiner Fahraufgabe zu stören und so die Fahrsicherheit unter Umständen zu gefährden. Die tatsächliche Eintrittswahrscheinlichkeit eines Konflikts hängt sowohl von dem vom Fahrer präferierten Manöver als auch von dessen Situationsbewusstsein, also der Entscheidung des Fahrers, ob das präferierte Manöver durchführbar ist, ab. Diese Entscheidung kann unter Umständen auch noch einige Sekunden später revidiert werden, wenn der Fahrer während dieser Zeit zusätzliche Informationen, beispielsweise durch weitere Spiegel- oder Schulterblicke, erhält. Für die Entscheidung des Fahrerassistenzsystems über die Notwendigkeit einer Warnung ist es oftmals jedoch ausreichend, die Wahrscheinlichkeit dafür zu bestimmen, dass der Fahrer aktuell einen Handlungsplan verfolgt, bei dem dieser Konflikt auftritt. Aus der Literatur, insbesondere Holger Berndt und Klaus Dietmayer, "Driver intention inference with vehicle onboard sensors", 2009 IEEE International Conference on Vehicular Electronics and Safety (ICVES), pages 102-107, 2009; oder Georges S. Aoude, Vishnu R. Desaraju, Lauren H. Stephens, und Jonathan P. How, "Behavior classification algorithms at intersections and validation using naturalistic data", 2011 IEEE Intelligent Vehicles Symposium (IV), (IV) : 601-606, June 2011,sind Verfahren bekannt, die die Wahrscheinlichkeit dafür bestimmen, dass der Fahrer die Absicht hat, ein Manöver eines entsprechenden Typs, etwa ein Rechtsabbiege-Manöver oder einen Fahrstreifenwechsel, innerhalb eines bestimmten Vorausschauhorizonts durchzuführen. Dazu wird für jeden adressierten Manövertyp ein Klassifikator trainiert, der die Eintrittswahrscheinlichkeit eines entsprechenden Manövers auf Basis einer festen Menge von Merkmalen abzuschätzen kann. Es ist bekannt, dass für einen derartigen Klassifikator ein Naive-Bayes-Ansatz gewählt werden kann.

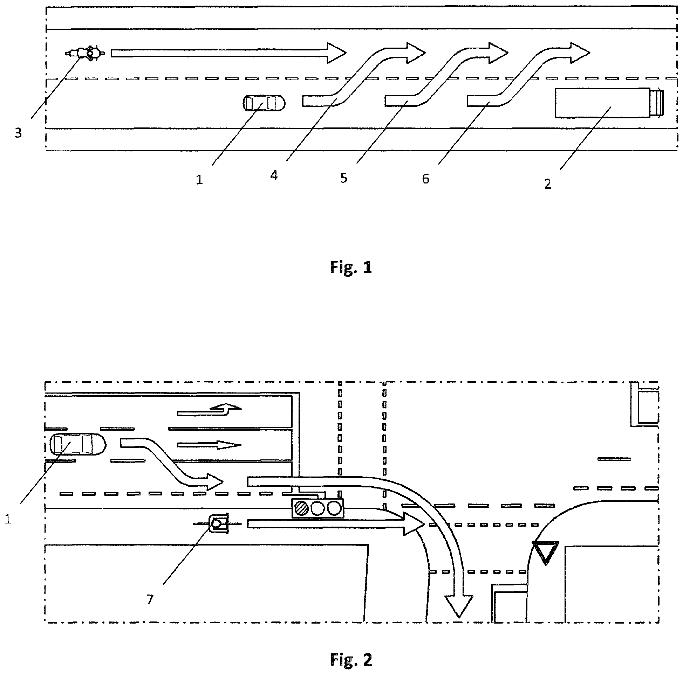

Ein Beispiel für den Einsatz eines Fahrerassistenzsystems wird nun mit Bezug auf Fig. 1 erläutert. Der Fahrer des betrachteten Fahrzeugs 1 (PKW) fährt auf dem rechten Fahrstreifen einer Autobahn und nähert sich dabei einem langsamer fahrenden LKW 2 auf demselben Fahrstreifen. Es besteht die Wahrscheinlichkeit, dass der Fahrer innerhalb der nächsten Sekunden einen Fahrstreifenwechsel durchführen möchte, um den LKW zu überholen. Gleichzeitig nähert sich von Hinten ein deutlich schnelleres Motorrad 3. Es wird davon ausgegangen, dass der Fahrer den Motorradfahrer übersieht. Je nach konkretem Zeitpunkt des Fahrstreifenwechsel sind folgende Situationen zu unterscheiden: 1. Der Fahrstreifenwechsel erfolgt so zeitig, dass dem Motorradfahrer ausreichend Zeit zum Reagieren und Abbremsen bleibt (Pfeil 4). Die Situation ist somit unkritisch, eine Reaktion des Fahrerassistenzsystems ist nicht oder nur in abgeschwächter Form erwünscht. 2. Der Fahrstreifenwechsel erfolgt zu einem Zeitpunkt, an dem sich der Motorradfahrer noch hinter dem PKW 1 befindet, ihm jedoch nicht mehr ausreichend Zeit zum Reagieren und Abbremsen bleibt (Pfeil 5). Diese Situation ist somit höchst gefährlich. Häufigste Unfallursache auf deutschen Autobahnen sind unzureichend abgesicherte Fahrstreifenwechsel. Hier ist eine Reaktion des Fahrerassistenzsystems ausdrücklich erwünscht. 3. Der Fahrstreifenwechsel erfolgt ohnehin erst, nachdem das Motorrad den PKW passiert hat (Pfeil 6). Die Situation ist somit unkritisch, eine Reaktion des Fahrerassistenzsystems nicht oder nur in abgeschwächter Form erwünscht. Ein Fahrstreifen wird auch als Fahrspur bezeichnet.

Damit das Fahrerassistenzsystem den Anforderungen bestmöglich gerecht werden kann, wird die Eintrittswahrscheinlichkeit für jede der genannten Situationen benötigt. Typische Merkmale zur Vorhersage von Fahrstreifenwechseln sind der Fahrtrichtungsanzeiger (Blinker), die Querablage zur Fahrstreifenmitte sowie die Spiegelblicke des Fahrers. Je nach verbauter Sensorik (Kamera zur Erkennung der Fahrstreifenmarkierung, Eye-Tracking System) und deren momentaner Datenqualität stehen für die Vorhersage jedoch nur ein Teil dieser Merkmale zur Verfügung. Eine Lösung nach dem Stand der Technik würde darin bestehen, dass für jede der alternativen Fahrstreifenwechselzeitpunkte und für mögliche Kombination der in Frage kommenden Merkmale in der Entwicklungsphase des Fahrerassistenzsystems ein Klassifikator trainiert wird, der eine Maßzahl für die Eintrittswahrscheinlichkeit des Manövers ausgibt.

Nachteilig an den bestehenden Ansätzen zur Vorhersage der Fahrerabsicht ist, dass diese auf einer festen Menge von Merkmalen beziehungsweise Typen von fahrtrelevanten Handlungen des Fahrers basieren, also beispielsweise der Geschwindigkeit oder Beschleunigung des Fahrzeugs, dem Setzen eines Fahrtrichtungsanzeigers wie einem Blinker, etc. Für jede neue Merkmalskombination, die sich beispielsweise aus der aktuellen Verfügbarkeit der Merkmale ergibt, sowie jeden Typ von Manöver und jede Fahrsituation ist ein neuer Klassifikator zu trainieren. Die Folge sind ein stark erhöhter Entwicklungs- und Absicherungsaufwand sowie eine schlechtere Zuverlässigkeit der Vorhersage, wenn der zuständige Klassifikator nicht eindeutig bestimmt werden kann.

Ein weiteres Beispiel für den Einsatz eines Fahrerassistenzsystems wird im Folgenden mit Bezug auf Fig. 2 gegeben. Der Fahrer des betrachteten Fahrzeugs 1 (PKW) nähert sich einer innerstädtischen Kreuzung auf dem mittleren Fahrstreifen. Recht spät fällt ihm ein, dass er an dieser rechts abbiegen möchte. Der Wechsel auf den rechten Fahrstreifen erfolgt daher erst unmittelbar vor der Kreuzung. Durch das Fahrstreifenwechsel-Manöver und die damit verbundenen Spiegelblicke sowie der Notwendigkeit des gleichzeitigen Abbremsens und des darauffolgenden Einlenkens werden die kognitiven Fähigkeiten des Fahrers in ihrer Gänze beansprucht. In der Folge besteht die Gefahr, dass er den Fahrradfahrer 7, der sich parallel zur Straße auf dem Radweg bewegt, übersieht, und es dadurch zu einer Kollision zwischen den beiden kommt. Das Ziel eines entsprechenden Fahrerassistenzsystems besteht darin, die drohende Kollision zu vermeiden. Dies kann dadurch erreicht werden, dass das Assistenzsystem in letzter Sekunde ein Bremsmanöver einleitet. Dies setzt jedoch eine sehr hohe Zuverlässigkeit in der Erkennung des Fahrradfahrers 7 sowie der Prädiktion dessen weiterer Trajektorie voraus, die zum aktuellen Zeitpunkt nur selten gegeben ist. Stattdessen soll der Fahrer des PKW 1 auf den Fahrradfahrer 7 hingewiesen werden, so dass er die Situation selbstständig und souverän bewältigen kann. Dies macht es jedoch erforderlich, dass das Assistenzsystem die Handlungsabsicht des Fahrers frühzeitig, d.h. in diesem Fall noch vor dem Wechsel auf den rechten Fahrstreifen, erkennt. Im konkreten Fall besteht die Handlungsabsicht des Fahrers in einem Fahrstreifenwechsel mit darauf folgendem Rechtsabbiegen. Bestehende Ansätze zur Fahrerintentionserkennung sind aber lediglich darauf ausgelegt, das jeweils nächste Fahrmanöver zu erkennen. In diesem Fall kommt ein Rechtsabbiege-Manöver als erstes Manöver jedoch nicht in Frage, da sich das Fahrzeug zunächst auf dem mittleren Fahrstreifen befindet, von welchem aus ein Rechtsabbiegen nicht möglich ist. Hinzu kommt, dass selbst die Verlässlichkeit der Vorhersage des ersten Manövers, dem Fahrstreifenwechsel, durch einen reinen Fahrstreifenwechselklassifikator durch die Überlagerung der durch die einzelnen Fahrmanöver bedingten Fahrerverhaltensweisen beeinträchtigt wird.

Dies lässt sich leicht nachvollziehen, wenn man beispielsweise das in der Offenlegungsschrift DE 10 2006 040 537 A1 offenbarte Verfahren betrachtet. Bei diesem wird auf eine Fahrstreifenwechselabsicht des Fahrers geschlossen, wenn bestimmte Lenkbewegungen in Verbindung mit dem Blinker-Signal sowie einer gleich bleibenden Geschwindigkeit vorliegen. In dem betrachteten Szenario ist der Fahrer aufgrund seines Abbiegewunsches gezwungen, seine Geschwindigkeit bereits vor und während des Fahrstreifenwechsels zu reduzieren. Dies steht im Gegensatz zu dem Verhalten, das bei der Entwicklung des Fahrstreifenwechel-Klassifikators angenommen wurde, und kann daher leicht zu einer fehlerhaften Erkennung der Fahrerabsicht führen.

Die Offenlegungsschrift DE 10 2010 044 631 A1 betrifft ein Verfahren und eine Vorrichtung zur Bestimmung der Kollisionswahrscheinlichkeit eines Kraftfahrzeugs mit einem bewegten Objekt. Die Aufgabe der Erfindung ist es die Kollisionswahrscheinlichkeit eines Fahrzeugs mit einem bewegten Objekt genauer bestimmen zu können.

Die Veröffentlichung US 2011/0098922 A1 offenbart ein System, das eine Kartendatenbank verwendet als einen Vorhersagesensor und insbesondere als einen Sensor zur Fahrzeugpfadvorhersage.

Es ist also darüber hinaus ein Nachteil der bestehenden Ansätze, dass, sofern mehrere Manöver in Folge stattfinden, das zweite sowie jedes weitere Manöver in dieser Folge nicht mehr vorhergesagt werden können. Darüber hinaus kann die Überlagerung der für die einzelnen Teilmanöver typischen Fahrerverhaltensweisen dazu führen, dass selbst das erste Manöver nicht mehr zuverlässig vorhergesagt werden kann.

Die der Erfindung zugrundeliegende Aufgabe ist es die oben genannten Nachteile zu überkommen.

Diese Aufgabe wird durch das Verfahren und das Fahrerassistenzsystem gemäß den unabhängigen Patentansprüchen gelöst. Vorteilhafte Weiterbildungen sind in den abhängigen Ansprüchen definiert.

In einem Aspekt umfasst ein Verfahren zum Vorhersagen des Fahrpfades eines Fahrzeugs: Bereitstellen der aktuellen Position des Fahrzeugs; Bestimmen einer Gruppe von zukünftigen möglichen Fahrpfaden des Fahrzeugs anhand einer digitalen Landkarte, der aktuellen Position, und einer vorgegebenen Maximalgröße jedes Fahrpfades, insbesondere einer Maximallänge jedes Fahrpfades, einer Maximalfahrzeit für jeden Fahrpfad, oder einer Maximalanzahl von Fahrmanövern je Fahrtstrecke; Bereitstellen von Messungen von vorbestimmten Typen von fahrtrelevanten Handlungen des Fahrers des Fahrzeugs, insbesondere der Geschwindigkeit oder Beschleunigung des Fahrzeugs, des Setzens eines Fahrtrichtungsanzeigers, und/oder des Blickortes, an den ein Fahrer im Umfeld des Fahrzeugs blickt; Bereitstellen, für jeden Fahrpfad der Gruppe von Fahrpfaden, von einem oder mehreren Modellen, die jeweils für einen oder mehrere Typen von Handlungen des Fahrers eine Auftrittsmaßzahl bereitstellen, wobei die Auftrittsmaßzahl eine Maßzahl für die Wahrscheinlichkeit bereit stellt, dass die Messungen der fahrtrelevanten Handlungen beim Führen des Fahrzeugs auf dem jeweiligen Fahrpfad auftreten; Bestimmen für jeden Fahrpfad und für jedes Modell der jeweiligen Auftrittsmaßzahl; Bestimmen, für jeden Fahrpfad aus der Gruppe der Fahrpfade, einer Ausführungsmaßzahl, nämlich einer Maßzahl für die Wahrscheinlichkeit, dass der entsprechende Fahrpfad befahren wird, basierend auf den für den Fahrpfad jeweils bestimmten Auftrittsmaßzahlen.

Auf diese Weise wird es möglich, die Wahrscheinlichkeit von Fahrpfaden zu beschreiben, die mehrere Fahrmanöver umfassen. Somit kann auch die Fahrerabsicht auch bei einer Kombination von aufeinanderfolgenden Fahrmanövern eruiert werden. Gleichzeitig bietet das vorgestellte Verfahren die Möglichkeit durchgängige Fahrerverhaltensmodelle, hierin auch schlicht Modelle genannt, für einzelne oder mehrere Typen von Fahrerhandlungen (Merkmale) zu verwenden anstelle von Klassifikatoren für spezielle Fahrmanöver. Ein weiterer Vorteil ist der geringere Entwicklungs- und Absicherungsaufwand durch Verwendung durchgängiger Modelle (Fahrerverhaltensmodelle) für einzelne Typen von fahrtrelevanten Handlungen (Merkmale) anstelle von Klassifikatoren für spezielle Fahrmanöver. Weiterhin kann die Genauigkeit der Vorhersage verbessert werden.

Beim Bereitstellen der Modelle kann vorgesehen sein, das oder die Modelle für jeweils einen Fahrpfad der Gruppe von Fahrpfaden zu parametrisieren anhand von Eigenschaften des jeweiligen Fahrpfades, die mithilfe der digitalen Landkarte bestimmt werden. Die Parameter können dabei explizit in der digitalen Landkarte gespeichert sein, oder aus den dort vorhandenen Informationen (beispielsweise dem Verlauf der Straße) abgeleitet werden. Dabei können die auf dem jeweiligen Fahrpfad vom Fahrer auszuführenden Fahrmanöver berücksichtigt werden und insbesondere für jedes Fahrmanöver ein Modell parametrisiert werden. Ein Modell wird an jeden Fahrpfad dadurch parametriert (angepasst), dass dessen Geometrie und/oder Beziehung zu anderen Fahrpfaden oder Kreuzungen berücksichtigt wird. In das jeweilige Modell können beispielsweise die Krümmung des Fahrpfades für Fahrstreifenwechsel, Abbiegemanöver oder Geradeausfahrten eingehen.

Typischerweise stellt ein Modell eine Auftrittsmaßzahl für je ein bestimmtes Fahrmanöver bereit. Eine Maßzahl kann entweder genau die entsprechende Wahrscheinlichkeit sein, oder ein Zwischenergebnis bei der Berechnung der entsprechenden Wahrscheinlichkeit. Dabei entsprechen die Verhältnisse der Maßzahlen untereinander den Verhältnissen der entsprechenden Wahrscheinlichkeiten untereinander. Die bestimmten Fahrpfade sind insbesondere aus Teilstücken aufgebaut.

Ferner umfasst das Verfahren: Bestimmen, für jeden Fahrpfad der Gruppe von Fahrpfaden, im jeweiligen Fahrpfad auszuführende Fahrmanöver; Bereitstellen von vorbestimmten Wahrscheinlichkeiten der Ausführung eines Fahrmanövers; Bereitstellen, für jeden Fahrpfad der Gruppe von Fahrpfaden, einer Standardmaßzahl, nämlich einer Maßzahl für die Wahrscheinlichkeit zur Ausführung des jeweiligen Fahrpfades der Gruppe von Fahrpfaden, basierend auf den vorbestimmten Wahrscheinlichkeiten für die im jeweiligen Fahrpfad auszuführenden Fahrmanöver; Wobei das Bestimmen der Ausführungsmaßzahl auch die Standardmaßzahl für den entsprechenden Fahrpfad berücksichtigt. Die Standardmaßzahl kann eine Maßzahl für die a-priori Wahrscheinlichkeit sein, dass der Fahrer einen bestimmten Fahrpfad wählt, also einer Wahrscheinlichkeit ohne Berücksichtigung der Handlungen des Fahrers. Die Standardmaßzahl kann auf der statistischen Häufigkeit der Wahl des jeweiligen Fahrpfades basieren.

Typischerweise umfasst das Verfahren in einer Weiterbildung: Für jeden Fahrpfad der Gruppe der Fahrpfade: Bestimmen der auf dem entsprechenden Fahrpfad auszuführenden Fahrmanöver; Wobei das Bestimmen von einem oder mehreren Modellen für jeden Fahrpfad die auf dem jeweiligen Fahrpfad auszuführenden Fahrmanöver berücksichtigt.

In einer Weiterbildung umfasst das Bereitstellen von einem oder mehreren Modellen: Bereitstellen jedes Modells in je mindestens zwei Varianten, wobei jede Variante einen anderen Fahrstil einer vorgegebenen Gruppe von Fahrstilen berücksichtigt, insbesondere aktive oder defensive Fahrweisen. Die Berücksichtigung kann durch eine leicht abweichende Parametrisierung von Varianten eines Modells erreicht werden. Auf diese Weise kann durch die Berücksichtigung von verschiedenen Fahrstilen von Fahrern die Vorhersage des Fahrpfades verbessert werden.

In einer bevorzugten Weiterbildung umfasst das Verfahren ferner: Bereitstellen einer Information über die auf der Fahrbahn verfügbaren Fahrstreifen, auf die die aktuelle Position des Fahrzeugs hindeutet; Bestimmen, für jeden Fahrstreifen, einer Fahrstreifenmaßzahl für die Wahrscheinlichkeit, dass sich das Fahrzeug auf dem jeweiligen Fahrstreifen befindet; Wobei beim Bestimmen der Ausführungsmaßzahl die Fahrstreifenmaßzahl berücksichtigt wird. In einer weiteren Fortbildung wird die Fahrstreifenmaßzahl bei der Bestimmung der Standardmaßzahl berücksichtigt. Wenn die aktuelle Positionierung des Fahrzeuges nicht genau genug ist, um den Fahrstreifen festzustellen, auf dem sich das Fahrzeug befindet, kann jedem Fahrstreifen eine Wahrscheinlichkeit zugeordnet werden, dass sich das Fahrzeug auf ihm befindet. Für jeden Fahrstreifen werden dann die möglichen Fahrpfade bestimmt. In der Bestimmung der Ausführungsmaßzahl für jeden Fahrpfad werden dann diese Wahrscheinlichkeiten berücksichtigt, sie gehen sozusagen als a-priori Wahrscheinlichkeiten in die Berechnung ein.

Zur Bestimmung von möglichen Kollisionen des Fahrzeugs kann das Verfahren um folgende Schritte erweitert werden: Bestimmen der Position und Bewegung anderer Verkehrsteilnehmer oder von Hindernissen, insbesondere mithilfe einer Umfelderfassung; Bestimmen derjenigen Fahrpfade, die zu einer Kollision mit anderen Verkehrsteilnehmern oder Hindernissen führen könnten; Bestimmen einer Kollisionsmaßzahl, die angibt, mit welcher Wahrscheinlichkeit eine Kollision mit einem anderen Verkehrsteilnehmer oder einem Hindernis stattfinden könnte, unter Berücksichtigung der Ausführungsmaßzahlen der Fahrpfade, die zu einer Kollision führen könnten.

In einem anderen Aspekt umfasst ein Fahrerassistenzsystem elektronische Verarbeitungsmittel, die dazu eingerichtet sind, eines der obenstehenden Verfahren auszuführen. Diese elektronischen Verarbeitungsmittel können ein Computer, insbesondere ein Mikrocontroller, oder anwendungsspezifische Schaltkreise sein.

In wieder einem anderen Aspekt umfasst ein Verfahren: Ermittlung der in der aktuellen Fahrsituation prinzipiell möglichen Fahrmanöver bzw. der prinzipiell möglichen Kombinationen mehrerer aufeinanderfolgender Fahrmanöver innerhalb eines gegebenen Vorausschauhorizonts, vorzugsweise als abzählbar endliche Menge räumlich und zeitlich diskretisierter Trajektorien, vorzugsweise mit Hilfe eines sog. Hypothesenbaums. Im Folgenden werden die verschiedenen Möglichkeiten als Hypothesen bezeichnet. Nutzung eines Fahrerverhaltensmodells, das das zu erwartende Fahrerverhalten im Hinblick auf ein Merkmal oder eine Gruppe von Merkmalen für eine Menge von Fahrsituationen beschreibt, die vorzugsweise alle denkbaren Fahrsituationen, mindestens jedoch eine Menge besonders häufig auftretender Fahrsituationen umfasst. Berechnung einer Maßzahl für die Übereinstimmung des beobachteten Fahrerverhaltens mit dem zu erwartenden Fahrerverhalten für das genannte Fahrerverhaltensmodell und für jede Hypothese unter der Annahme, dass der Fahrer die Absicht hat, das entsprechende Fahrmanöver durchzuführen. Berechnung einer Maßzahl für die Wahrscheinlichkeit einer jeden Hypothese, indem die oben beschriebene Maßzahl mit einer a-priori-Wahrscheinlichkeit für die jeweilige Hypothese kombiniert (vorzugsweise multipliziert) wird. Berechnung der Wahrscheinlichkeit einer jeden Hypothese, indem die zugehörige Maßzahl für die Eintrittswahrscheinlichkeit durch die Summe der Wahrscheinlichkeits-Maßzahlen aller Hypothesen geteilt wird. In einer Weiterbildung kann für die Berechnung der Eintrittswahrscheinlichkeit einer jeden Hypothesen nicht nur ein, sondern mehrere Fahrerverhaltensmodelle herangezogen werden. In diesem Fall werden die folgenden Berechnungen durchgeführt anstelle der vorstehend genannten Berechnung der Übereinstimmung: Berechnung einer Maßzahl für die Übereinstimmung des beobachteten Fahrerverhaltens mit dem zu erwartenden Fahrerverhalten für jedes Fahrerverhaltensmodell und für jede Hypothese unter der Annahme, dass der Fahrer die Absicht hat, das entsprechende Fahrmanöver durchzuführen. Berechnung einer Maßzahl für die gesamtheitliche Übereinstimmung des beobachteten Fahrerverhalten mit dem zu erwartenden Fahrerverhalten, indem die Maßzahlen für die einzelnen Fahrerverhaltensmodelle miteinander kombiniert (vorzugsweise multipliziert) werden.

Unterschiedliche Fahrertypen können durch Bereitstellung mehrerer alternativer Fahrerverhaltensmodelle für das gleiche Merkmal bzw. die gleiche Gruppe von Merkmalen modelliert werden. Die Zuverlässigkeit der Schätzung der Fahrerintention lässt sich steigern, indem diese gewichtet mit der Häufigkeit des jeweiligen Fahrertyps bei der Berechnung der Maßzahl für die Übereinstimmung des beobachteten Fahrerverhaltens mit dem zu erwartenden Fahrerverhalten für die jeweilige Hypothese berücksichtigt werden.

Falls das Ergebnis der Eigenlokalisierung mehrere benachbarte Fahrstreifen als mögliche Fahrzeugpositionen zulässt, werden anstelle der oben beschriebenen Fahrmanöver Kombinationen aus Anfangsposition und Fahrmanöver betrachtet. In diesem Fall kann die Wahrscheinlichkeit für die jeweilige Fahrstreifenzuordnung in der a-priori-Wahrscheinlichkeit für die entsprechende Kombination berücksichtigt werden.

Die a-priori-Wahrscheinlichkeit kann darüber hinaus zusätzliche Informationen über die Eintrittswahrscheinlichkeit der prinzipiell möglichen Manöver berücksichtigen. Dies umfasst insbesondere statistische Auswertungen über die Zahl der Fahrer, die dieses Fahrmanöver in dieser Situation oder an dieser Stelle durchführen, wie auch das statistische Auswertungen über das frühere Verhalten des gleichen Fahrers. Beispielsweise kann dessen täglicher Arbeitsweg aus den Historiendaten gelernt und für Vorhersage von Abbiegemanövern entlang der Strecke genutzt werden.

Hierin gelten bevorzugt folgende Bezeichnungen: Auftrittsmaßzahl: $f(O_i|H_x)$; Ausführungsmaßzahl: $P_{a\text{-}posteriori}(H_x|O)$; Standardmaßzahl: $P_{a\text{-}priori}(H_x)$; Fahrpfad= Trajektorie: $H_x$.

KURZE BESCHREIBUNG DER ZEICHNUNGEN

Fig. 1 zeigt schematisch eine Fahrsituation, in der der Einsatz eines Fahrerassistenzsystems sinnvoll sein kann.

Fig. 2 zeigt schematisch eine weitere Fahrsituation, in der der Einsatz eines Fahrerassistenzsystems sinnvoll sein kann.

Fig. 3 zeigt ein Flussdiagramm des erfindungsgemäßen Verfahrens gemäß einem Ausführungsbeispiel.

Fig. 4 zeigt schematisch einen segmentierten Ausschnitt einer digitalen Karte gemäß einem Ausführungsbeispiel.

Fig. 5 zeigt einen für Fig. 4 extrahierten Baumgraph zur Bestimmung von Fahrpfaden für den Startpunkt Q1 gemäß einem Ausführungsbeispiel.

Fig. 6 zeigt schematisch Beispiele für den Verlauf von Berechnungsgrundlagen von Auftrittsmaßzahlen, die von einem Modell für einen Fahrtrichtungsanzeiger bereitgestellt werden.

Fig. 7 zeigt ein Beispiel für den Verlauf von Auftrittsmaßzahlen, die von einem Modell für einen Fahrtrichtungsanzeiger bereitgestellt werden.

Fig. 8 stellt beispielhaft Blickpunkte eines Fahrers dar, die für den Ausschnitt einer digitalen Karte wie in Fig. 1 gezeigt berechnet wurden.

Gleiche Bezugszeichen beziehen sich auf sich entsprechende Elemente über die Figuren hinweg.

DETAILLIERTE BESCHREIBUNG DER AUSFÜHRUNGSBEISPIELE

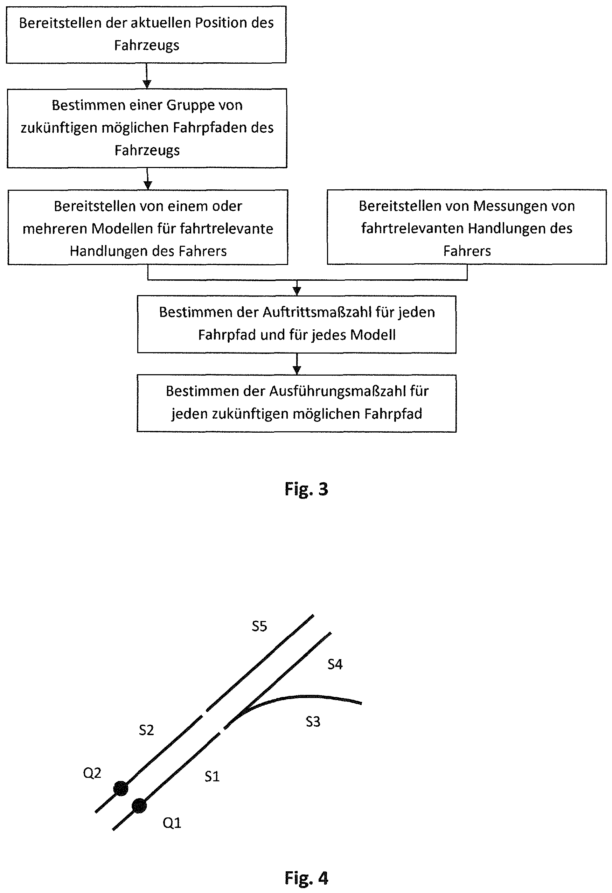

Fig. 3 zeigt ein Flussdiagramm des erfindungsgemäßen Verfahrens gemäß einem Ausführungsbeispiel. Das Verfahren beginnt mit dem Feststellen der aktuellen Position des Fahrzeugs, beispielsweise mithilfe eines GPS und/oder GLONASS Empfängers. Mithilfe der festgestellten Position kann das Fahrzeug dann auf einer digitalen Karte verortet werden. Für die Zwecke der Erfindung wird vorteilhafterweise eine hochgenaue digitale Karte verwendet, also einer digitalen geographischen Karte die einzelne Fahrspuren verzeichnet und die eine Genauigkeit im Bereich von 10 cm bis 50 cm oder bis zu 1 m aufweist. Da die Positionierung mittels typischer GPS und/oder GLONASS Empfänger oft nicht genau genug ist, um die Position sicher einer bestimmten Fahrspur zuzuordnen, ist vorgesehen, für jede Fahrspur eine Fahrspurmaßzahl auszugeben, die repräsentiert, mit welcher Wahrscheinlichkeit sich das Fahrzeug auf der Fahrspur befindet.

Anschließend wird eine Gruppe von zukünftigen möglichen Fahrpfaden des Fahrzeugs bestimmt. Dies geschieht mithilfe der digitalen Karte. Zur Bestimmung der zukünftigen möglichen Fahrpfade werden die Fahrspuren der digitalen Karte in Segmente eingeteilt, anders ausgedrückt: die Fahrspuren werden diskretisiert. Fig. 4 zeigt schematisch einen Ausschnitt einer hochgenauen digitalen Karte. Der Ausschnitt zeigt eine Fahrbahn, mit zwei Fahrspuren in derselben Fahrtrichtung und einer Abzweigung etwa in der Mitte des Ausschnitts. Die zwei Fahrspuren sind durch die vier Segmente S1, S2, S4 und S5 aufteilt. Die Abzweigung ist durch das Segment S3 dargestellt. Zur weiteren Bestimmung der möglichen Fahrpfade werden verkehrsleitende Vorgaben, wie die Festlegung, dass eine Fahrspur eine Abbiegespur ist oder von einer Fahrspur kein Wechsel auf eine andere Fahrspur möglich ist, berücksichtigt. Weiterhin wird die Annahme getroffen, dass innerhalb eines Segmentes nur ein Fahrspurwechsel ausgeführt wird beziehungsweise, dass nur ein Fahrspurwechsel alle 500 m ausgeführt wird. Typischerweise ist ein Segment einer geradeaus führenden Fahrspur 5, 10, 50, 200, 300 oder 500 m lang. Abzweigungen werden bei der Diskretisierung berücksichtigt. Im vorliegenden Beispiel wurde das Fahrzeug auf eine der beiden Spuren an den durch die Kreise angedeuteten Stellen Q1 und Q2 positioniert. Für jede Stelle Q1 und Q2 wurde die Wahrscheinlichkeit $P_{a-priori}$ (Q1) und $P_{a-priori}$ (Q2) bestimmt, dass sich das Fahrzeug an ihr befindet. Diese Wahrscheinlichkeit ist die Fahrspurmaßzahl. In manchen Implementierungen wird auch ein Zwischenergebnis bei der Berechnung der Wahrscheinlichkeit als Fahrspurmaßzahl verwendet.

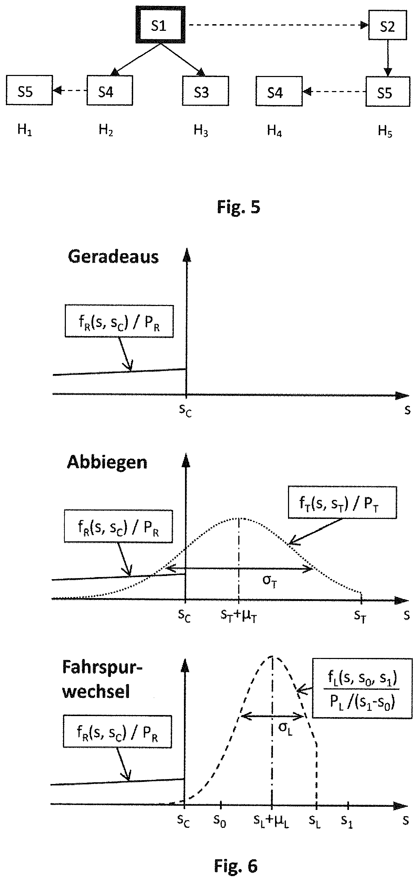

Für jede Stelle Q1 und Q2 werden nun die Fahrpfade bestimmt, die sich jeweils dem Fahrzeug bieten. Dabei werden die Fahrpfade nur bis zu einer vorgegebenen Maximallänge, beispielsweise 200 m oder 1 km, extrahiert. Das Ergebnis wird für jede Stelle (Startpunkt) als Baumgraph dargestellt. Fig. 5 zeigt den für Fig. 4 extrahierten Baumgraph für den Startpunkt Q1 (dargestellt durch die dicke Umrandung des Kästchens S1). Fahrspurwechsel sind durch gestrichelte Pfeile dargestellt. Jeder Pfad innerhalb des Baumes beginnend von S1 zu einem der Blätter des Graphen stellt einen Fahrpfad dar und alle Fahrpfade zusammen bilden die Gruppe von Fahrpfaden für Q1. Ein möglicher Fahrpfad kann auch als Hypothese bezeichnet werden.

Im nächsten Schritt wird jedem Fahrpfad eine Standardmaßzahl zugewiesen, vorliegend die a-priori Wahrscheinlichkeit, dass der jeweils betrachtete Fahrpfad durchfahren wird. Diese Zuweisung geschieht ohne Wissen um fahrtrelevante Handlungen des Fahrers. Es können die auf dem jeweiligen Fahrpfad auszuführenden Fahrmanöver berücksichtigt werden und statistischen Auswertungen, wie wahrscheinlich das jeweils auszuführende Fahrmanöver ist. Die Wahrscheinlichkeit eines jeden Fahrpfades ergibt sich unter Anwendung der folgenden typischen Regeln: Die anfangs bestimmte Wahrscheinlichkeit (vorliegend $P_{a-priori}$(Q1) bzw. $P_{a-priori}$(Q2)) wird gleichmäßig auf die jeweiligen Kinder (nachfolgenden Knoten) verteilt, wenn es sich bei dem auszuführenden Fahrmanöver um ein Abbiegen handelt. Diese Wahrscheinlichkeit wird weiter gleichmäßig auf nachfolgende Kinder verteilt, sofern vorhanden und soweit ein Abbiegen ausgeführt wird. Falls von einem Knoten aus ein Fahrspurwechsel möglich ist, gibt dieser Knoten einen Teil seiner Wahrscheinlichkeit an den Knoten ab, auf den der Fahrspurwechsel führt, beispielsweise 1 / 3. Die Wahrscheinlichkeit für einen Fahrpfad ergibt sich dann aus der Wahrscheinlichkeit des Blattknotens (des letzten Knotens). Beispielsweise ergibt sich für den Fahrpfad S1-S4-S5 die Wahrscheinlichkeit $P_{a-priori}$ (S1-S4-S5) = $P_{a-priori}$ (Q1) * 2 / 3 / 2 / 3, unter der Annahme, dass die Wahrscheinlichkeit für einen Fahrspurwechsel 1/3 ist. Mit $H_x$ werden im Folgenden die jeweiligen Fahrpfade bezeichnet, siehe Fig. 5.

Im nächsten Schritt werden eines oder mehrere Modelle für fahrtrelevante Handlungen des Fahrers bereitgestellt. Die Modelle berechnen basierend auf den Messungen der fahrtrelevanten Handlungen Wahrscheinlichkeiten für die Messung der fahrtrelevanten Handlungen für einen Fahrpfad. Die Modelle können mithilfe der hochgenauen digitalen Karte parametriert werden, beispielsweise dem Krümmungsverlauf einer Kurve oder einer Geradeausfahrt, sowie Distanzen zu Kreuzungspunkten, oder ähnlichem. Dazu können zunächst die Eigenschaften beziehungsweise Parameter jedes Fahrpfades der Gruppe von Fahrpfaden aus der digitalen Karte extrahiert werden. Ein Beispiel für solch ein Modell ist die Bestimmung der Wahrscheinlichkeit (bzw. Auftrittsmaßzahl) einer Aktivierung eines Blinkersignals in Abhängigkeit von der Distanz zu einem Abbiegepunkt auf einem Fahrpfad. Detaillierte Beispiele dieser Modelle werden im Folgenden gegeben.

Gleichzeitig werden Messungen von fahrtrelevanten Handlungen des Fahrers bereitgestellt. Diese Messungen betreffen den aktuellen Status eines Fahrtrichtungsanzeigers und, falls einschlägig, die Zeit seit der letzten Aktivierung (genannt Messung I), den Geschwindigkeitsverlauf der letzten 1,4 s (genannt Messung V) und die Blickrichtung beziehungsweise den Blickpunkt des Fahrers innerhalb der letzten 1 s (genannt Messung G). Die Kombination der Messungen wird als Observation O bezeichnet, O = [I, V, G]. Für jede Messung von I, V und G wird ein Modell bereitgestellt. Generell kann auch vorgesehen sein, für die gesamte Observation O ein einzelnes Modell bereitzustellen, oder für Unterkombinationen der Observationen, also beispielsweise für I und G.

Mithilfe der Modelle und der gemessenen fahrtrelevanten Handlungen werden für jeden Fahrpfad die Auftrittsmaßzahlen (oder nur eine einzelne Auftrittsmaßzahl) berechnet. Die Auftrittsmaßzahl wird in diesem Ausführungsbeispiel durch die likelihood Funktion $f(O_n|H)$ berechnet. Verknüpft beispielsweise ein Modell, die Messung für das Blinkersignal I für den ersten Fahrpfad $H_1$ zu einer Wahrscheinlichkeit, ergibt sich diese als $f(O_1|H_1)$. Die in der Observation $O_1$ enthaltenen Messungen von G werden dabei von der Verknüpfung unberücksichtigt gelassen. Ein an den Fahrpfad $H_2$ angepasstes Modell, das das Blinkersignal berücksichtigt, stellt die Wahrscheinlichkeit $f(O_1|H_2)$ bereit. Zur Berechnung der Auftrittsmaßzahl können auch Zwischenergebnisse der Berechnung von $f(O_i|H_x)$ verwendet werden, die das Verhältnis aller zu berechnenden Auftrittswahrscheinlichkeiten wiedergeben.

Schließlich wird die Ausführungsmaßzahl berechnet, die sich im vorliegenden Ausführungsbeispiel folgendermaßen berechnet:

$$P_{a-posteriori}(H_x|O) = \frac{\prod_i f(O_i|H_x)}{P(O)} P_{a-priori}(H_x)$$

Diese Wahrscheinlichkeit wird als a-posteriori Wahrscheinlichkeit bezeichnet, da sie die fahrtrelevanten Handlungen des Fahrers berücksichtigt.

Wie ersichtlich ist, ist für alle $H_x$ der Nenner des Bruchs gleich, so dass dessen Berechnung ausgelassen werden kann. Die möglichen Fahrpfade könnten auch nur anhand der Ausführungsmaßzahl $\prod_i f(O_i|H_x) * P_{a-priori}(H_x)$ ins Verhältnis gebracht werden. Über die Ausführungsmaßzahl lässt sich somit eine Vorhersage des zukünftigen Fahrpfades eines Fahrzeugs treffen. Dies ist beispielsweise der Fahrpfad der Gruppe von Fahrpfaden, der im Verhältnis zu den Ausführungsmaßzahlen der anderen Fahrpfade die größte Ausführungsmaßzahl aufweist.

## Fahrtrichtungsanzeiger

Ein erstes Modell, das zur Berechnung der Ausführungsmaßzahl verwendet werden kann, ist ein Modell für die Aktivierung des Fahrtrichtungsanzeigers, insbesondere eines Blinkers eines PKW. Zur Verwendung dieses Modells werden zunächst das oder die auf einem Fahrpfad auszuführenden Fahrmanöver bestimmt.

Für Fahrmanöver, über die das Modell eine Aussage treffen kann, werden dann die entsprechenden Parameter des Modells für den jeweiligen Fahrpfad und für das jeweilige Fahrmanöver aus der digitalen Karte extrahiert. Dabei wird das Modell für je ein Fahrmanöver parametrisiert. Es existieren also mehrere unterschiedlich parametrisierte Modelle auf einem Fahrpfad wenn mehrere Fahrmanöver ausgeführt werden. Es ist jedoch auch denkbar, dass eine Kombination von Fahrmanövern durch ein Modell abgebildet wird und dieses dann für die Kombination von Fahrmanövern parametrisiert wird.

Das Modell trifft im vorliegenden Ausführungsbeispiel eine Aussage für die Fahrmanöver: geradeaus Fahren, rechts Abbiegen, links Abbiegen, Fahrspurwechsel nach rechts, Fahrspurwechsel nach links. Im vorliegenden Ausführungsbeispiel ist das Modell auch von dem Status des Fahrtrichtungsanzeigers zum Bewertungszeitpunkt abhängig:

S    Zustand des Fahrtrichtungsanzeigers (deaktiviert, aktiviert nach rechts, aktiviert nach links).

Die folgende Tabelle detailliert das für die Aktivierung des Fahrtrichtungsanzeigers verwendete Modell gemäß dem Ausführungsbeispiel und gibt Formelbezeichnungen für die Berechnung der Auftrittsmaßzahlen an. Im vorliegenden Ausführungsbeispiel entspricht die Auftrittsmaßzahl gleich der entsprechenden Wahrscheinlichkeit. Es ist auch denkbar, eine Auftrittsmaßzahl zu verwenden, die auf einem Zwischenergebnis der Wahrscheinlichkeitsrechnung basiert und trotzdem erlaubt die Fahrmanöver in ein Verhältnis zu setzen, das dem der Wahrscheinlichkeiten entspricht.

Wenn auf einem Fahrpfad mehrere Fahrmanöver auszuführen sind, ergibt sich die Auftrittsmaßzahl $f(O_i|H_x)$ lediglich aus dem nächsten auszuführenden Fahrmanöver (von $s_c$ aus), weil davon auszugehen ist, dass der Fahrer den Fahrtrichtungsanzeiger nur gemäß dem nächsten auszuführenden Manöver betätigt. Es wird also nur ein Modell für jeden Fahrpfad verwendet.

| Fahrmanöver | S = Links | S = Deaktiviert | S = Rechts |
|---|---|---|---|
| Geradeaus Fahren | $f_R(s_A, s_C)$ | $1 - 2P_R$ | $f_R(s_A, s_C)$ |
| Rechts Abbiegen | $f_R(s_A, s_C)$ | $1 - 2P_R - F_r(s_C, s_T)$ | $f_T(s_A, s_T) + f_R(s_A, s_C)$ |
| Links Abbiegen | $f_R(s_A, s_C) + f_T(s_A, s_T)$ | $1 - 2P_R - F_T(s_C, s_T)$ | $f_R(s_A, s_C)$ |
| Fahrspurwechsel nach rechts | $f_R(s_A, s_C)$ | $1 - 2P_R - F_L(s_C, s_0, s_1)$ | $f_L(s_A, s_0, s_1) + f_R(s_A, s_C)$ |
| Fahrspurwechsel nach links | $f_R(s_A, s_C) + f_L(s_A, s_0, s_1)$ | $1 - 2P_R - F_L(s_C, s_0, s_1)$ | $f_R(s_A, s_C)$ |

Je nach zu bestimmendem Modell werden die benötigten Parameter (Formelbuchstaben in Klammern) aus der digitalen Karte extrahiert. Dabei bedeuten:

$s_C$   Entfernung der aktuellen Position zu einem Referenzpunkt auf der digitalen Karte. Dieser Referenzpunkt kann willkürlich gesetzt sein, wird aber vorteilhafterweise einige hundert Meter vor der aktuellen Position gesetzt.

$s_A$   Entfernung zum Ort, an dem der Fahrtrichtungsanzeiger in seinen gegenwärtigen Zustand versetzt wurde, falls er aktiviert wurde.

$s_T$   Entfernung zum Gabelpunkt der Abbiegung

$s_0$   Beginn des Segments des Fahrspurwechsels (als Entfernung vom Referenzpunkt), oder, wenn $s_0 < s_C$, die aktuelle Entfernung $s_C$

$s_1$   Das Ende des Segmentes des Fahrspurwechsels (als Entfernung vom Referenzpunkt)

Im Einzelnen berechnen sich die Wahrscheinlichkeiten zu:

$$f_R(s, s_C) = P_R \, \lambda \, e^{\lambda (s - s_C)}$$

Wobei

$$\lambda = -\log(1 - P_{10})/\Delta s$$

Typische Werte für $P_R$ sind 0,015; 0,02; 0,025. Typische Werte für $P_{10}$ sind 1/150; 1/200; 1/250. Typische Werte für $\Delta s$ sind 0,5 m; 1 m; 1,5 m.

$$f_T(s, s_T) = \frac{P_T \, q_T}{\sqrt{2\pi} \, \sigma_T} \exp\left[ -\frac{1}{2}\left( \frac{s - s_T - \mu_T}{\sigma_T} \right)^2 \right]$$

Wobei $P_T$ beispielsweise 0,78 ist, $\mu_T = -55,6$ m und $\sigma_T = 25,3$ m und

$$q_T^{-1} = \int_{-\infty}^{s_T} \frac{f_T(s, s_T)}{P_T \, q_T} \, ds = \frac{1}{2}\left[ 1 + \operatorname{erf}\left( \frac{-\mu_T}{\sqrt{2} \, \sigma_T} \right) \right]$$

mit

$$\mathrm{erf}(x) = \frac{2}{\sqrt{\pi}} \int_0^x e^{-t^2}\, dt\qquad .$$

$$F_{\mathrm{T}}(s, s_{\mathrm{T}}) = \frac{P_{\mathrm{T}}\, q_{\mathrm{T}}}{2}\left[ 1 + \mathrm{erf}\left(\frac{s - s_{\mathrm{T}} - \mu_{\mathrm{T}}}{\sqrt{2}\,\sigma_{\mathrm{T}}}\right)\right]$$

$$f_{\mathrm{L}}(s, s_0, s_1) = \frac{P_{\mathrm{L}}\, q_{\mathrm{L}}}{2\,(s_1 - s_0)}\, \mathrm{erf}\left(\frac{s - s' - \mu_{\mathrm{L}}}{\sqrt{2}\,\sigma_{\mathrm{L}}}\right)\Bigg|_{s'=s_1}^{s'=s_0}$$

mit $P_L$ typischerweise 0,68, $\mu_L = v_C * {-2{,}83}\ s$, $\sigma_L = v_C * 0{,}61\ s$ und erf(...) sowie $q_L$ wie oben ($v_C$ ist die gegenwärtige Geschwindigkeit).

$$F_{\mathrm{L}}(s, s_0, s_1) =$$

$$\frac{P_{\mathrm{L}}\, q_{\mathrm{L}}}{2}\left[ 1 + \frac{\sqrt{2}\,\sigma_{\mathrm{L}}}{s_1 - s_0}\, H\left(\frac{s - s' - \mu_{\mathrm{L}}}{\sqrt{2}\,\sigma_{\mathrm{L}}}\right)\Bigg|_{s'=s_1}^{s'=s_0}\right]$$

mit dem indefiniten Integral:

$$H(x) = \int \mathrm{erf}(x)\, dx = x\,\mathrm{erf}(x) + \frac{1}{\sqrt{\pi}}\, e^{-x^2} + C.$$

Fig. 6 zeigt schematisch Beispiele für den Verlauf der oben dargestellten einzelnen Berechnungselementen $f_R$, $f_T$ und $f_L$.

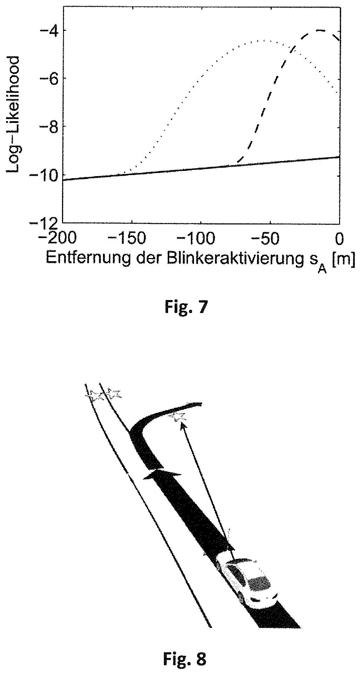

Fig. 7 zeigt ein Beispiel für den Verlauf von Auftrittsmaßzahlen verschiedener Modelle für eine Blinkeraktivierung. Im Diagramm gibt die gepunktete Kurve den Logarithmus für die Auftrittsmaßzahl eines Abbiegemanövers an, die gestrichelte Kurve gibt den Logarithmus der Auftrittsmaßzahl eines Fahrspurwechsels an und die durchgezogene Kurve gibt den Logarithmus der Auftrittsmaßzahl bei einer Geradeausfahrt an.

**Blickrichtung**

Ein weiteres Modell, das zur Berechnung der Ausführungsmaßzahl verwendet werden kann, ist ein Modell für den Blickpunkt des Fahrers. Der Blickpunkt des Fahrers ist der Punkt des Umfeldes, der von dem Fahrer betrachtet wird. Dieser lässt sich aus der Blickrichtung des Fahrers ableiten. Statt der genauen Blickrichtung, also der Ausrichtung der Pupillen des Fahrers, kann auch die Ausrichtung des Kopfes verwendet werden. Alternativ kann beispielsweise auch der Punkt Tangential zur Kurveninneren Fahrstreifenmarkierung, der dem tatsächlichen Blickpunkt des Fahrers am nächsten ist, als Blickpunkt bei der Berechnung verwendet werden. Systeme zum Bestimmen der Blickrichtung und Kopfausrichtung sind im Stand der Technik bekannt.

Das Modell wird für jeden Fahrpfad parametrisiert mithilfe der digitalen Landkarte. Im Modell wird ein Blickpunkt des Fahrers angenommen. Dieser liegt gemäß dem Modell um eine Strecke $\Delta s = a_0 + a_1 v_C$ vor dem Fahrzeug, wobei $a_0$ typischerweise 6 m ist, $a_1$ typischerweise 1 s ist und $v_C$ die aktuelle Geschwindigkeit des Fahrzeugs ist. Typische durch das Modell bestimmte Blickpunkte eines Fahrers sind in Fig. 8 durch Sterne dargestellt. Fig. 8 stellt denselben Ausschnitt der segmentierten digitalen Karte dar wie Fig. 4. In Fig. 8 ist für den Fahrpfad, der abbiegt, der Stern ganz rechts berechnet worden. Für die anderen Hypothesen des Geradeausfahrens entweder auf der linken oder rechten Fahrspur sind die durch die beiden dicht nebeneinander liegenden Sterne repräsentierten Blickpunkte berechnet worden. In der Fig. 8 blickt der Fahrer auf den Blickpunkt, der für das Abbiegemanöver errechnet wurde.

Für jeden bestimmten Modell-Blickpunkt lässt sich eine erwartete Blickrichtung $\hat{\varphi}_k^{(h)}$ ableiten, wobei k einen Zeitschritt k bezeichnet und (h) die Hypothese, also den jeweiligen Fahrpfad, bezeichnet.

Es werden die Blickrichtungen $\varphi_k$ des Fahrers zu den Zeitpunkten k gemessen. Die Abweichung zwischen der gemessenen und vom Modell für einen Fahrpfad (h) bestimmten Blickrichtung ergibt sich zu: $\Delta\varphi_k^{(h)} = \varphi_k - \hat{\varphi}_k^{(h)}$.

Die Berechnung der Auftrittsmaßzahlen dieses Modells entspricht den tatsächlichen Wahrscheinlichkeiten $f(O_i|H_x) = f_{Gaze}$. Es kann aber auch vorgesehen sein, Zwischenergebnisse der Berechnung der Wahrscheinlichkeiten zu verwenden, die das Verhältnis der einzelnen Wahrscheinlichkeiten widerspiegeln. $f_{Gaze}$ berechnet sich für die Hypothese h zu:

$$f_{\text{Gaze}}^{(h)} = \exp\left[\frac{1}{N_{\text{Gaze}}} \sum_{i=0}^{N_{\text{Gaze}}-1} \log\left(f_\Phi\left(\varphi_{k-i} - \hat{\varphi}_{k-i}^{(h)}\right)\right)\right]$$

Wobei $N_{\text{Gaze}} = 10$ ist und

$$f_\Phi\left(\Delta\varphi_k^{(h)}\right) = \frac{1 - P_{\Phi 0}}{\sqrt{2\pi}\,\sigma_\Phi} \exp\left[-\frac{1}{2}\left(\frac{\Delta\varphi_k^{(h)}}{\sigma_\Phi}\right)^2\right] + \frac{P_{\Phi 0}}{2\pi},$$

Ein typischer Wert für $P_{\Phi 0}$ ist 0,11 und für $\sigma_\Phi$ 0,13.

**Geschwindigkeit des Fahrzeugs**

Ein weiteres Modell, das zur Berechnung der Ausführungsmaßzahl verwendet werden kann, ist ein Modell für die Geschwindigkeit des Fahrzeugs, insbesondere bei Annäherungen an Kreuzungen. Mithilfe des in der Patentanmeldung DE 10 2013 200 724 oder in der Patentanmeldung DE 10 2013 203 908 beschriebenen Verfahrens können auch mithilfe von Beobachtungen der Geschwindigkeit des Fahrzeugs, Auftrittsmaßzahlen ermittelt werden. Diese Auftrittsmaßzahlen können bei der Bestimmung der Ausführungsmaßzahl berücksichtigt werden.

**Patentansprüche**

1.  Verfahren zum Vorhersagen von Fahrpfaden eines Fahrzeugs, umfassend:

    Bereitstellen der aktuellen Position des Fahrzeugs;
    Bestimmen einer Gruppe von zukünftigen möglichen Fahrpfaden des Fahrzeugs anhand einer digitalen Landkarte, der aktuellen Position, und einer vorgegebenen Maximalgröße jedes Fahrpfades, insbesondere einer Maximallänge jedes Fahrpfades, einer Maximalfahrzeit für jeden Fahrpfad, oder einer Maximalanzahl von Fahrmanövern je Fahrtstrecke;
    Bereitstellen von Messungen von vorbestimmten Typen von fahrtrelevanten Handlungen des Fahrers des Fahrzeugs, insbesondere der Geschwindigkeit oder Beschleunigung des Fahrzeugs, des Setzens eines Fahrtrichtungsanzeigers, und/oder des Blickortes, an den ein Fahrer im Umfeld des Fahrzeugs blickt;
    Bereitstellen, für jeden Fahrpfad der Gruppe von Fahrpfaden, von einem oder mehreren Modellen, die jeweils für einen oder mehrere Typen von Handlungen des Fahrers eine Auftrittsmaßzahl bereitstellen, wobei die Auftrittsmaßzahl eine Maßzahl für die Wahrscheinlichkeit bereit stellt, dass die Messungen der fahrtrelevanten Handlungen beim Führen des Fahrzeugs auf dem jeweiligen Fahrpfad auftreten;

Bestimmen für jedes Modell der jeweiligen Auftrittsmaßzahl;

Bestimmen, für jeden Fahrpfad aus der Gruppe der Fahrpfade, einer Ausführungsmaßzahl, nämlich einer Maßzahl für die Wahrscheinlichkeit, dass der entsprechende Fahrpfad befahren wird, basierend auf den für den Fahrpfad jeweils bestimmten Auftrittsmaßzahlen;

**gekennzeichnet durch**:

Bestimmen, für jeden Fahrpfad der Gruppe von Fahrpfaden, im jeweiligen Fahrpfad auszuführende Fahrmanöver;

Bereitstellen von vorbestimmten Wahrscheinlichkeiten der Ausführung eines Fahrmanövers;

Bereitstellen, für jeden Fahrpfad der Gruppe von Fahrpfaden, einer Standardmaßzahl, nämlich einer Maßzahl für die Wahrscheinlichkeit zur Ausführung des jeweiligen Fahrpfades der Gruppe von Fahrpfaden, basierend auf den vorbestimmten Wahrscheinlichkeiten für die im jeweiligen Fahrpfad auszuführenden Fahrmanöver;

wobei das Bestimmen der Ausführungsmaßzahl auch die Standardmaßzahl für den entsprechenden Fahrpfad berücksichtigt;

Bestimmen des Fahrpfades der Gruppe von Fahrpfaden, der im Verhältnis der Ausführungsmaßzahlen der anderen Fahrpfade die größte Ausführungsmaßzahl aufweist.

2. Verfahren nach Anspruch 1, ferner umfassend:

Bereitstellen einer Information über die auf der Fahrbahn verfügbaren Fahrspuren, auf die die aktuelle Position des Fahrzeugs hindeutet;

Bestimmen, für jede Fahrspur, einer Fahrspurmaßzahl für die Wahrscheinlichkeit, dass sich das Fahrzeug auf der jeweiligen Fahrspur befindet, basierend auf der Bestimmung der aktuellen Position;

wobei das Bestimmen der Standardmaßzahl die Fahrspurmaßzahl berücksichtigt, insbesondere durch eine Multiplikation mit der Fahrspurmaßzahl.

3. Verfahren nach einem der vorhergehenden Ansprüche, ferner umfassend:

Für jeden Fahrpfad der Gruppe der Fahrpfade: Bestimmen der auf dem entsprechenden Fahrpfad auszuführenden Fahrmanöver;

wobei das Bestimmen von einem oder mehreren Modellen für jeden Fahrpfad die auf dem jeweiligen Fahrpfad auszuführenden Fahrmanöver berücksichtigt.

4. Verfahren nach einem der vorhergehenden Ansprüche, wobei das Bereitstellen von einem oder mehreren Modellen umfasst:

Bereitstellen jedes Modells in je mindestens zwei Varianten, wobei jede Variante einen anderen Fahrstil einer vorgegebenen Gruppe von Fahrstilen berücksichtigt.

5. Verfahren nach einem der vorhergehenden Ansprüche, ferner umfassend:

Bestimmen der Position und Bewegung anderer Verkehrsteilnehmer oder von Hindernissen, insbesondere mithilfe einer Umfelderfassung;

Bestimmen derjenigen Fahrpfade, die zu einer Kollision mit anderen Verkehrsteilnehmern oder Hindernissen führen könnten;

Bestimmen einer Kollisionsmaßzahl, die angibt, mit welcher Wahrscheinlichkeit eine Kollision mit einem anderen Verkehrsteilnehmer oder einem Hindernis stattfinden könnte, unter Berücksichtigung der Ausführungsmaßzahlen der Fahrpfade, die zu einer Kollision führen könnten.

6. Fahrerassistenzsystem, umfassend elektronische Verarbeitungsmittel, die dazu eingerichtet sind, ein Verfahren nach einem der vorhergehenden Ansprüche auszuführen.

**Claims**

1. Method for predicting driving paths of a vehicle, comprising:

   Providing the current position of the vehicle;
   Determining a group of future possible driving paths of the vehicle on the basis of a digital map, the current position and a specified maximum size of each driving path, in particular a maximum length of each driving path, a maximum driving time for each driving path, or a maximum number of driving manoeuvres per driving distance;
   Providing measurements of predetermined types of travel-relevant actions of the driver of the vehicle, in particular the speed or acceleration of the vehicle, the setting of a travel direction indicator and/or the viewing location which a driver is looking at in the surroundings of the vehicle;
   Providing, for each driving path of the group of driving paths, one or more models which each provide an occurrence measure for one or more types of actions of the driver, wherein the occurrence measure provides a measure of the probability that the measurements of the travel-relevant actions will occur when the vehicle is being driven on the respective driving path;
   Determining the respective occurrence measure for each model;
   Determining, for each driving path from the group of driving paths, an execution measure, specifically a measure of the probability that the corresponding driving path will be driven along, on the basis of the occurrence measures which are respectively determined for the driving path;
   **characterized by**:

   Determining, for each driving path of the group of driving paths, driving manoeuvres which are to be executed in the respective driving path;
   Providing predetermined probabilities for the execution of a driving manoeuvre;
   Providing, for each driving path of the group of driving paths, a standard measure, specifically a measure of the probability for the execution of the respective driving path of the group of driving paths, on the basis of the predetermined probabilities of the driving manoeuvres which are to be executed in the respective driving path;
   wherein the determination of the execution measure also takes into account the standard measure for the corresponding driving path;
   Determining the driving path of the group of driving paths which has the highest execution measure in comparison with the execution measures of the other driving paths.

2. Method according to Claim 1, also comprising:

   Providing information about the lanes which are available on the carriageway and to which the current position of the vehicle points;
   Determining, for each lane, a lane measure for the probability that the vehicle is located on the respective lane, on the basis of the determination of the current position;
   wherein the determination of the standard measure takes into account the lane measure, in particular by multiplying by the lane measure.

3. Method according to one of the preceding claims, also comprising:
   For each driving path of the group of driving paths:

   determining the driving manoeuvres which are to be executed on the corresponding driving path;
   wherein the determination of one or more models for each driving path takes into account the driving manoeuvres which are to be executed on the respective driving path.

4. Method according to one of the preceding claims, wherein the provision of one or more models comprises:
   Providing each model in at least two variants in each case, wherein each variant takes into account a different driving style of a specified group of driving styles.

5. Method according to one of the preceding claims, also comprising:

   Determining the position and movement of other road users or of obstacles, in particular using sensing of the surroundings;

Determining those driving paths which could lead to a collision with other road users or obstacles;

Determining a collision measure which indicates the probability that a collision could take place with another road user or an obstacle, taking into account the execution measures of the driving paths which could lead to a collision.

**6.** Driver assistance system, comprising electronic processing means which are configured to execute a method according to one of the preceding claims.

**Revendications**

**1.** Procédé permettant de prédire des trajets de conduite d'un véhicule, comprenant les étapes consistant à :

fournir la position actuelle du véhicule ;

déterminer un groupe de futurs trajets de conduite possibles du véhicule à l'aide d'une carte géographique numérique, de la position actuelle et d'une dimension maximale prédéfinie de chaque trajet de conduite, en particulier d'une longueur maximale de chaque trajet de conduite, d'une durée de conduite maximale pour chaque trajet de conduite, ou d'un nombre maximal de manœuvres par itinéraire ;

fournir des mesures de types prédéterminés d'actions du conducteur du véhicule importantes pour la conduite, en particulier de la vitesse ou de l'accélération du véhicule, de l'activation d'un indicateur de direction, et/ou de l'endroit vers lequel regarde un conducteur dans l'environnement du véhicule ;

fournir, pour chaque trajet de conduite du groupe de trajets de conduite, un ou plusieurs modèles qui fournissent respectivement pour un ou plusieurs types d'actions du conducteur une valeur de mesure d'apparition, la valeur de mesure d'apparition fournissant une valeur de mesure de la probabilité que les mesures des actions importantes pour la conduite apparaissent lors de la conduite du véhicule sur le trajet de conduite respectif ;

déterminer la valeur de mesure d'apparition pour chaque modèle ;

déterminer, pour chaque trajet de conduite du groupe des trajets de conduite, une valeur de mesure d'exécution, notamment une valeur de mesure de la probabilité que le trajet de conduite correspondant soit parcouru, sur la base des valeurs de mesure d'apparition déterminées respectivement pour le trajet de conduite ;

**caractérisé par** les étapes consistant à :

déterminer, pour chaque trajet de conduite du groupe de trajets de conduite, des manœuvres à exécuter sur le trajet de conduite respectif ;

fournir des probabilités prédéterminées de l'exécution d'une manœuvre ;

fournir, pour chaque trajet de conduite du groupe de trajets de conduite, une valeur de mesure standard, notamment une valeur de mesure de la probabilité de l'exécution du trajet de conduite respectif du groupe de trajets de conduite, sur la base des probabilités prédéterminées pour les manœuvres à exécuter sur le trajet de conduite respectif ;

dans lequel la détermination de la valeur de mesure d'exécution tient également compte de la valeur de mesure standard pour le trajet de conduite correspondant ;

déterminer le trajet de conduite du groupe de trajets de conduite qui présente par rapport aux valeurs de mesure d'exécution des autres trajets de conduite la plus grande valeur de mesure d'exécution.

**2.** Procédé selon la revendication 1, comprenant en outre les étapes consistant à :

fournir une information concernant les voies de circulation disponibles sur la chaussée vers lesquelles pointe la position actuelle du véhicule ;

déterminer, pour chaque voie de circulation, une valeur de mesure de voie de circulation de la probabilité que le véhicule se trouve sur la voie de circulation respective, sur la base de la détermination de la position actuelle ;

dans lequel la détermination de la valeur de mesure standard tient compte de la valeur de mesure de voie de circulation, en particulier par une multiplication par la valeur de mesure de voie de circulation.

**3.** Procédé selon l'une quelconque des revendications précédentes, comprenant en outre :

pour chaque trajet de conduite du groupe des trajets de conduite : la détermination des manœuvres à exécuter sur le trajet de conduite correspondant ;

dans lequel la détermination d'un ou de plusieurs modèles tient compte pour chaque trajet de conduite des manœuvres à exécuter sur le trajet de conduite respectif.

**4.** Procédé selon l'une quelconque des revendications précédentes, dans lequel la fourniture d'un ou de plusieurs modèles comprend :

la fourniture de chaque modèle en au moins deux variantes respectivement, chaque variante tenant compte d'un autre style de conduite d'un groupe prédéfini de styles de conduite.

**5.** Procédé selon l'une quelconque des revendications précédentes, comprenant en outre les étapes consistant à :

déterminer la position et le déplacement d'autres usagers de la route ou d'obstacles, en particulier à l'aide d'une détection d'environnement ;

déterminer les trajets de conduite qui pourraient aboutir à une collision avec d'autres usagers de la route ;

déterminer une valeur de mesure de collision qui indique avec quelle probabilité une collision avec un autre usager de la route ou un obstacle pourrait avoir lieu en tenant compte des valeurs de mesure d'exécution des trajets de conduite qui pourraient aboutir à une collision.

**6.** Système d'aide au conducteur, comprenant des moyens de traitement électroniques qui sont aménagés pour effectuer un procédé selon l'une quelconque des revendications précédentes.

**Fig. 1**

**Fig. 2**

```
┌─────────────────────────────────┐
│  Bereitstellen der aktuellen    │
│      Position des Fahrzeugs     │
└─────────────────────────────────┘
                │
                ▼
┌─────────────────────────────────┐
│  Bestimmen einer Gruppe von     │
│ zukünftigen möglichen Fahrpfaden│
│          des Fahrzeugs          │
└─────────────────────────────────┘
                │
                ▼
┌─────────────────────────────┐   ┌─────────────────────────────────┐
│  Bereitstellen von einem     │   │  Bereitstellen von Messungen von│
│  oder mehreren Modellen für  │   │  fahrtrelevanten Handlungen des │
│  fahrtrelevante Handlungen    │   │             Fahrers             │
│       des Fahrers             │   │                                 │
└─────────────────────────────┘   └─────────────────────────────────┘
             │                                   │
             └──────────────┬────────────────────┘
                            ▼
        ┌───────────────────────────────────────┐
        │  Bestimmen der Auftrittsmaßzahl für    │
        │    jeden Fahrpfad und für jedes Modell │
        └───────────────────────────────────────┘
                            │
                            ▼
        ┌───────────────────────────────────────┐
        │  Bestimmen der Ausführungsmaßzahl für  │
        │   jeden zukünftigen möglichen Fahrpfad │
        └───────────────────────────────────────┘
```

**Fig. 3**

**Fig. 4**

**Fig. 5**

**Fig. 6**

**Fig. 7**

**Fig. 8**

**IN DER BESCHREIBUNG AUFGEFÜHRTE DOKUMENTE**

**In der Beschreibung aufgeführte Patentdokumente**

- DE 102006040537 A1
- DE 102010044631 A1
- US 20110098922 A1
- DE 102013200724
- DE 102013203908

**In der Beschreibung aufgeführte Nicht-Patentliteratur**

- **HOLGER BERNDT ; KLAUS DIETMAYER.** Driver intention inference with vehicle onboard sensors. *2009 IEEE International Conference on Vehicular Electronics and Safety (ICVES),* 2009, 102-107
- **GEORGES S. AOUDE ; VISHNU R. DESARAJU ; LAUREN H. STEPHENS ; JONATHAN P. HOW.** Behavior classification algorithms at intersections and validation using naturalistic data. *2011 IEEE Intelligent Vehicles Symposium (IV), (IV),* Juni 2011, 601-606